# EUROPEAN PATENT SPECIFICATION

(11) **EP 3 060 366 B1**
(45) Date of publication and mention of the grant of the patent: **24.08.2022**
(21) Application number: 14786696.6
(22) Date of filing: 22.10.2014
(51) Int. Cl.: B22F 3/14, B22F 3/18, C22C 33/02, C22C 38/06, F16L 9/02, B22F 1/12, C22C 32/00, B22F 9/04, C22C 1/05

(54) **FERRITIC ALLOYS AND METHODS FOR PREPARING THE SAME**
FERRITISCHE LEGIERUNGEN UND VERFAHREN ZUR HERSTELLUNG DAVON
ALLIAGES FERRITIQUES ET LEURS PROCÉDÉS DE PRÉPARATION

(30) Priority: 22.10.2013 GB 201318660
(43) Date of publication of application: 31.08.2016
(73) Proprietor: Materials Center Leoben Forschung GmbH, 8700 Leoben (AT)
(72) Inventor: MASEK, Bohuslav, 331 51 Kaznejov (CZ); SVOBODA, Jiri, 623 00 Brno (CZ); EBNER, Reinhold, A-8793 Trofaiach (AT)
(74) Representative: Dilg, Haeusler, Schindelmann Patentanwaltsgesellschaft mbH
(86) International application number: PCT/EP2014/072667
(87) International publication number: WO 2015/059199

(56) References cited:
- EP-A1- 0 441 574
- EP-A2- 0 738 782
- WO-A2-96/38592
- JP-A- 2001 348 654
- US-B1- 6 280 682
- WOLSKI K ET AL: "EFFECT OF NANOMETRIC OXIDE DISPERSION ON CREEP RESISTANCE OF ODS-FEAI PREPARED BY MECHANICAL ALLOYING", INTERMETALLICS, ELSEVIER SCIENCE PUBLISHERS B.V, GB, vol. 4, no. 4, 1 January 1996 (1996-01-01) , pages 299-307, XP000581182, ISSN: 0966-9795, DOI: 10.1016/0966-9795(95)00053-4
- E Pagounis ET AL: "Processing and properties of particulate reinforced steel matrix composites", Materials Science and Engineering: A, vol. 246, no. 1-2, 1 May 1998 (1998-05-01) , pages 221-234, XP055407291, ISSN: 0921-5093, DOI: 10.1016/S0921-5093(97)00710-7

## Description

### FIELD OF THE INVENTION

The present invention relates to ferritic alloys having excellent creep-, corrosion- and oxidation-resistance and to methods for preparing the same. More specifically, the present invention relates to ferritic alloys that are strengthened by particles contained in a matrix of the alloy.

### BACKGROUND

In applications where structural materials are subjected to high temperature, to corrosive and oxidation environment and to external loading, usually two types of creep resistant materials are applied. Nickel based superalloys, in special cases in the form of single-crystal, and ferritic steels strengthened by dispersion of yttria particles or complex Y, Ti, Cr oxides (so-called ODS steels). Both materials are resistant to long-term high temperature creep. Their disadvantage is, however, a complicated processing and extremely high price. The price is influenced besides the complicated processing by the price of raw materials, which drastically increased in recent years. The materials involve a high fraction of rare materials, such as nickel, rhenium or yttrium.

The structural materials may also be represented by composite materials, which are heterogeneous and composed of two or more phases with significantly different mechanical, physical and chemical properties. Usually one of the phases is continuous and it is called matrix. The discontinuous phase is called reinforcement.

In conventional ODS alloys the strengthening yttrium oxide is dispersed in the matrix by mechanical alloying, which represents the first step in processing. The yttria particles can then change their chemical composition by reaction with the matrix during hot consolidation which represents the second step in processing, or during heat treatment and exposure. Typically, the process of preparing conventional ODS alloys involves hot isostatic pressing (HIP) under inert gas atmosphere, which represents a costly process step.

Recently, new ODS steels have been described in K. M. Miller, K. F. Russel, D. T. Hoelzer: Characterization of precipitates in MA/ODS ferritic alloys, J. Nucl. Mat. 351, (2006), 261; M. J. Alinger, G. R. Odette, D. T. Hoelzer: On the role of alloy composition and processing parameters in nanocluster formation and dispersion strengthening in nanostructured ferritic alloys, Acta Mater. 57, (2009), 392; M. C. Brandes, L. Kovarik, M. K. Miller, G. S. Daehm, M. J. Mills: Creep behavior and deformation mechanisms in a nanocluster strengthened ferritic steel, Acta Mater. 60, (2012), 1827; and M. C. Brandes, L. Kovarik, M. K. Miller, M. J. Mills: Morphology, structure, and chemistry of nanoclusters in a mechanically alloyed nanostructured ferritic steel, J. Mater. Sci. 47, (2012), 3913.

These new ODS steels have been prepared by very intensive mechanical alloying and total dissolution of the yttria particles in the mechanically alloyed powder was observed. Oxides then spontaneously precipitated during hot consolidation as complex nanoclusters or very fine precipitates. The total dissolution of yttria is rather surprising, since the equilibrium solubility of oxygen in the defect free matrix of steels is extremely low due to the formation of very stable oxides with alloying elements, such as Y, Ti, Cr or Al. However, the heavily deformed matrix with an extremely large defect density is evidently able to dissolve a much higher amount of oxygen. This can be explained by oxygen atom trapping in dislocation cores or at vacancies. Apparently, the trapping energy of oxygen is higher than the chemical bonding energy to yttrium, and thus yttria dissolves. Moreover, trapped oxygen stabilizes the defects like dislocations and vacancies against dynamic recovery and annihilation during the milling process.

During the hot consolidation of the new ODS steels, the density of dislocations and vacancies decreases drastically, oxygen is released, the matrix becomes supersaturated with oxygen, and oxides are formed as precipitates or nanoclusters with not fully established lattice structure. Moreover, the very fine grained microstructure of the mean grain size of approximately 200 nm is stabilized during the hot consolidation. Experiments show that despite of the extremely fine grains and nanoclusters, the new ODS steels exhibit unprecedented microstructure stability and, moreover, their creep strength (expressed as minimum creep rate at a given temperature and applied stress) is several orders of magnitude better than predicted by theories of diffusional creep by Coble or by Nabarro-Herring. This indicates that this microstructure containing oxide nanoclusters or precipitates has some extraordinary properties that cause excellent creep resistance of these new ODS steels at very high temperatures.

Due to the pressure on prices of structural materials, substitutes are being sought to replace the expensive conventional materials of high creep- and oxidation-resistance, which are represented by the above-described new ODS steels. Possible substitutes are represented by cost-effective iron and aluminium-based materials, which can replace for instance superalloys containing nickel, molybdenum and chromium.

Fe-AI-based alloys (both based on ferritic solid solution and/or intermetallic compounds Fe₃Al and FeAl) are promising candidates for many industrial applications (N.S. Stoloff, C.T. Liu, S.C. Deevi: Emerging applications of intermetallics, Intermetallics, 8, (2000), 1313; A.C. Lilly, S.C. Deevi, Z.P. Gibbs: Electrical properties of iron aluminides, Mat. Sci. Eng. A258, (1998), 42). They have excellent resistance to oxidation and sulfidation. The density of these alloys is about two thirds of the density of steels, and the input raw materials are very cheap. The main drawbacks are poor workability, ductility and toughness of the intermetallic compounds at room temperature and the low high-temperature strength of all Fe-Al-based alloys. Since the prospective industrial applications are typically at high temperatures, creep resistance is an important property. Improvements in creep resistance can also be obtained by solid solution hardening by means of the addition of Zr, Nb, Cr or Ti (P.R. Munroe, C.H. Kong: The effect of ternary additions on vacancy hardening in near stoichiometric FeAl, Intermetallics, 4, (1996), 403; P.J. Maziasz, G.M. Goodwin, D.J. Alexander, S. Viswanathan, in: Deevi S.C., Maziasz P.J., Sikka V.K., Cahn R.W., editors. International symposium on nickel and iron aluminides: processing, properties, and applications. Materials Park: ASM Int, (1997), 157), by precipitation of second phase particles by alloying with low solubility elements such as Zr, Nb, Ta, etc. (M. Palm: Concepts derived from phase diagram studies for the strengthening of Fe-Al-based alloys, *Intermetallics,* 13, (2005), 1286; F. Stein, M. Palm, G. Sauthoff: Mechanical properties and oxidation behaviour of two-phase iron aluminium alloys with Zr(Fe,Al)₂ Laves phase or Zr(Fe,Al)₁₂ τ₁ phase, Intermetallics, 13, (2005), 1275; D.G. Morris, M.A. Muñoz-Morris: Development of creep-resistant iron aluminides, Mat. Sci. Eng. A462, (2007), 45; S. Milenkovic, M. Palm: Microstructure and mechanical properties of directionally solidified Fe-Al-Nb eutectic, Intermetallics, 16, (2008), 1212) or by the dispersion of particles, such as Y₂O₃ (D.G. Morris: Possibilities for high-temperature strengthening in iron aluminides, Intermetallics, 6, (1998), 753; M.A. Morris-Muñoz: Creep deformation of oxide-dispersion-strengthened Fe-40AI intermetallic: thermal and athermal contributions, Intermetallics, 7, (1999), 653) in ODS Fe-AI alloys.

However, the creep data reviewed in D.G. Morris, I. Gutierrez-Urrutia, M.A. Muñoz-Morris: High temperature creep behaviour of an FeAl intermetallic strengthened by nanoscale oxide particles, Int. J. Plasticity 24, (2008), 1205 indicate that strengthening by oxide dispersion is the only way to achieve applicability of the alloy at temperatures above 900 °C, as the creep strength of 20 MPa at 950 °C is reached only in ODS alloys. Conventional ODS alloys are usually strengthened by nanoparticles of yttrium oxide and they represent a relatively well understood class of structural materials, but they are very expensive materials. As a consequence, suitable cheaper materials strengthened by a fine dispersion of highly stable particles are desired.

US 6,280,682 B1 discloses aluminum containing iron-base alloys having an entirely ferritic microstructure and including more than 4 wt.-% Al. In an embodiment, the alloy of D1 may contain 14 to 32 wt.-% Al and up to 30 wt.% oxide dispersoid and/or electrically insulating or electrically conductive covalent ceramic particles. The oxide particles may be Al₂O₃ and may have a particle size of 0.01 to 0.1 µm. EP 0 738 782 A2 discloses aluminum containing iron-base alloys having an entirely ferritic microstructure and including 14 to 32 wt.-% Al and up to 30% oxide dispersoid particles. The oxide particles may be Al₂O₃ and may have a particle size of 0.01 to 0.1 µm. WO 96/38592 A2 discloses an iron-based alloy composition. The matrix thereof comprises 30% Al and the alloy composition further includes 4 vol% Al₂O₃.

### OBJECTS OF THE INVENTION

The present invention aims at overcoming the above described problems and drawbacks. Thus, an object of the present invention is to provide alloys having excellent creep-, corrosion- and oxidation-resistance applicable at high temperatures up to 1100 °C and which are made of drastically less expensive raw materials. A further object of the present invention is to provide methods for preparing such alloys which are less complicated, and consequently less expensive, than the conventional methods for preparing hitherto known ODS steels.

### SUMMARY OF THE INVENTION

The present inventors have made diligent studies for solving these objects and have found that a ferritic alloy (though being typically less creep-resistant than austenitic alloys), mainly composed of Fe and Al, and oxide dispersion strengthening particles comprising Al-Fe based oxide precipitates and/or Al₂O₃ particles in a certain amount possesses excellent creep resistance in addition to an excellent corrosion- and oxidation-resistance. Moreover, while not excluded, the use of very expensive materials, such as nickel, rhenium or yttrium, is not necessary for achieving the excellent creep resistance. In addition, the ferritic alloy has a low density which is advantageous when weight reduction of the structural material is desired, for example for static or energy-saving reasons.

Accordingly, the present invention relates to a ferritic alloy, comprising a ferritic matrix and particles in an amount of from 1 to 40 vol% based on the total volume of the alloy, wherein the ferritic matrix comprises from 2 to 12 wt% Al, optionally from 0.3 to 25 wt% Cr, optionally from 0.3 to 15 wt% Ni, optionally from 0.3 to 15 wt% Mn, optionally from 0.05 to 3 wt% Mo, optionally from 0.05 to 6 wt% W, optionally from 0.01 to 3 wt% V, optionally from 0.01 to 1 wt% B, optionally from 0 to 1 wt% N, optionally from 0 to 10 wt% Si, optionally from 0 to 1 wt% P, optionally from 0 to 1 wt% Ti, optionally from 0 to 15 wt% Co, optionally from 0 to 3 wt% Cu, optionally from 0 to 1 wt% Y, optionally from 0 to 3 wt% Zr, optionally from 0 to 3 wt% Nb, optionally from 0 to 1 wt% Hf, optionally from 0 to 2 wt% Ta, optionally from 0 to 2 wt% Re, optionally from 0 to 3 wt% rare earth elements, the balance being Fe and inevitable impurities, wherein the particles comprise (i) and/or (ii), as defined in the following: (i) oxide particles comprising Al-Fe based oxide precipitates, wherein the Al-Fe based oxide precipitates comprise at least one of FeAl₂O₄, complex oxides of Al und Fe, and Al-Fe-X based oxide precipitates, wherein X represents at least one additional alloying element selected from the group consisting of Y, Ti, Cr and Si; (ii) Al₂O₃ particles having an average particle diameter of from 200 nm to 5.0 µm.

The present inventors have further found that a simplified method for preparing a highly creep-resistant ferritic alloy, in particular a ferritic alloy according to the present invention, can be provided by mechanical alloying of at least Fe powder, Al powder and at least one of Fe₂O₃ powder and Al₂O₃ powder and/or by mechanical alloying of at least Fe powder, Al powder in a reactive gas atmosphere (such as oxygen) having a well-defined amount of reactive gas(es) to obtain a mechanically alloyed powder; sealing the mechanically alloyed powder in a vessel (such as a low or high alloyed steel vessel) to obtain a sealed mechanically alloyed powder; and hot consolidating the sealed mechanically alloyed powder, in particular by plastic deformation. It is also possible to use a pre-alloyed powder containing Fe and Al instead of or in addition to the Fe powder and Al powder. While not excluded, hot isostatic pressing (HIP) under inert gas atmosphere and other process steps under inert gas atmosphere, as typically used for preparing conventional ODS steels, is not necessary for obtaining a compact highly creep-resistant alloy with this process.

Accordingly, the present invention further relates to a method for preparing a ferritic alloy, in particular a ferritic alloy according to the present invention, comprising the steps of mechanical alloying of at least Fe powder, Al powder, or a pre-alloyed powder containing Fe and Al, and at least one of Fe₂O₃ powder and Al₂O₃ powder having an average particle diameter of from 200 nm to 5.0 µm to obtain a mechanically alloyed powder and/or mechanical alloying of at least Fe powder and Al powder, or a pre-alloyed powder containing Fe and Al, in a reactive gas atmosphere, such as oxygen, to obtain a mechanically alloyed powder; sealing the mechanically alloyed powder in a vessel to obtain a sealed mechanically alloyed powder; hot consolidating the sealed mechanically alloyed powder.

Moreover, the present inventors have found that if an alloy comprises metallic elements with different affinities to oxygen, nitrogen or carbon, respectively, then the oxide, nitride or carbide, respectively, of the element with the lowest affinity to oxygen, nitrogen or carbon, respectively, is the most appropriate donor of oxygen, nitrogen or carbon, respectively, and subsequently complex oxides, nitrides or carbides, respectively, of elements with a higher affinity to oxygen, nitrogen or carbon, respectively, spontaneously precipitate during hot consolidation and/or heat treatment. Thereby oxygen can be dissolved in alloys in a sufficient amount and subsequently highly stable nanoclusters or fine precipitates of complex oxides precipitate during hot consolidation. Furthermore, a much higher volume fraction of oxides, nitrides or carbides can be achieved in the alloy compared with conventional ways of processing. As an alternative, oxygen may be introduced to the alloy in gaseous form by means of mechanical alloying of a powder mixture or a pre-alloyed powder in a mill which can be evacuated, filled with a reactive gas containing atmosphere and closed. Reactive gas dosing may be done repeatedly.

Accordingly, a method for preparing an alloy strengthened by precipitates is described, the method comprising the steps of mechanical alloying of at least a powder of a first metal element and a powder of a compound of a second metal with at least one of oxygen, nitrogen and carbon, wherein the affinity of the first metal to the at least one of oxygen, nitrogen and carbon is higher than the affinity of the second metal to the at least one of oxygen, nitrogen and carbon, to obtain a mechanically alloyed powder and/or mechanical alloying of at least a powder of a first metal element and a powder of a second metal element, or a pre-alloyed powder containing a first metal element and a second metal element in a reactive gas atmosphere, to obtain a mechanically alloyed powder; sealing the mechanically alloyed powder in a vessel to obtain a sealed mechanically alloyed powder; hot consolidating the sealed mechanically alloyed powder.

The alloys according to the present invention can be used for various appliances where excellent creep-, corrosion- and oxidation-resistance is required, such as in the chemical industry, in particular for pipes, reactors and vessels at high temperature and pressure, in the engine, turbine and energy industry, in particular for furnaces, heating elements, rotors and blades of gas turbines, and other parts under high temperature, high mechanical and/or high oxidation/corrosion load. In particular, the alloys according to the present invention are applicable at high temperatures up to about 1100 °C

### DETAILLED DESCRIPTION OF THE INVENTION

Hereinafter, details of the present invention and other features and advantages thereof will be described. However, the present invention is not limited to the following specific descriptions and drawing, but they are rather for illustrative purposes only.

It should be noted that features described in connection with one exemplary embodiment or exemplary aspect may be combined with any other exemplary embodiment or exemplary aspect, in particular features described with one exemplary embodiment of an alloy may be combined with any other exemplary embodiment of an alloy as well as with any exemplary embodiment of a method for preparing an alloy and vice versa, and features described with one exemplary embodiment of a method for preparing an alloy be combined with any other exemplary embodiment of a method for preparing an alloy as well as with any exemplary embodiment of an alloy and vice versa, unless specifically stated otherwise. Where an indefinite or definite article is used when referring to a singular term, such as "a", "an" or "the", a plural of that term is also included and vice versa, unless specifically stated otherwise.

The expression "comprising", as used herein, includes not only the meaning of "comprising", "including" or "containing", but also encompasses "consisting essentially of" and "consisting of".

In a first aspect, the present invention relates to a ferritic alloy, comprising a ferritic matrix and particles in an amount of from 1 to 40 vol% based on the total volume of the alloy, wherein the ferritic matrix comprises from 2 to 12 wt% Al, the balance being Fe and inevitable impurities, wherein the particles comprise (i) and/or (ii), as defined in the following: (i) oxide particles comprising Al-Fe based oxide precipitates; (ii) Al₂O₃ particles.

A "ferritic" alloy in particular denotes an alloy having a body-centered cubic crystal structure, in contrast to an austenitic alloy having a face-centered cubic crystal structure.

The ferritic alloy according the present invention comprises a ferritic matrix and particles dispersed therein.

The ferritic matrix comprises Al and Fe as essential elements.

The ferritic matrix comprises from 2 to 12 wt% Al, based on the weight of the ferritic matrix. By the inclusion of Al in an amount of from 2 to 12 wt%, a ferritic matrix can be obtained that is capable of finely dispersing particles and exhibits excellent corrosion- and oxidation-resistance. Moreover, the density of the ferritic matrix as well as of the ferritic alloy can be reduced. If the amount of Al in the ferritic matrix is less than 2 wt%, the above advantages are less pronounced, in particular the corrosion- and oxidation-resistance is inferior. In addition, there may be the risk that the matrix is not purely ferritic. If the amount of Al in the ferritic matrix is more than 12 wt%, the formation of brittle intermetallic phases may occur at lower temperatures with the consequence of a significant reduction of ductility. In particular, the ferritic matrix may comprise from 3 to 10 wt% Al, in particular from 3 to 9 wt% Al, in particular from 4 to 8 wt% Al, in particular from 4.5 to 7.5 wt% Al, in particular from 5.0 to 7.0 wt% Al, all based on the weight of the ferritic matrix.

Optionally, the ferritic matrix may additionally comprise further alloying elements, depending on the specific desired properties or specific intended use of the alloy. In particular, it may be advantageous to include further alloying elements, including micro-alloying elements, in such a manner that the matrix remains ferritic from room temperature to 1400 °C without any phase transformation.

For instance, the ferritic matrix may further comprise alloying elements, such as Cr (0.3 to 25 wt%), Ni (0.3 to 15 wt%), Mn (0.3 to 15 wt%), Mo (0.05 to 3 wt%), W (0.05 to 6 wt%), V (0.01 to 3 wt%), B (0.01 to 1 wt%), N (0 to 1 wt%), Si (0 to 10 wt%), P (0 to 1wt%), Ti (0 to 1 wt.%), Co (0 to 15wt%), Cu (0 to 3 wt%), Y (0 to 1 wt.%), Zr (0 to 3%), Nb (0 to 3 wt%), Hf (0 to 1 wt%), Ta (0 to 2 wt%), Re (0 to 2 wt%), and rare earth elements (0 to 3 wt %). Chromium and Yttrium may be added to further improve the corrosion and oxidation behaviour, nickel may be added in order to improve the ductility and toughness and to some extent also the corrosion and oxidation resistance, manganese may be added to modify the strength and flow behavior, and the carbide forming elements (such as molybdenum, tungsten and vanadium, titanium, niobium, hafnium, tantalum) and the nitride forming elements (such as chromium, titanium, niobium, hafnium) may be added in order to improve the strength in the lower temperature regime, taking some losses in the oxidation resistance into account. Boron may be added to increase the cohesion of grain boundaries. Rhenium and the other rare earth elements may be added to modify the oxidation and the flow behavior.

In an exemplary embodiment, the ferritic matrix may further comprise Cr and/or Ni and/or Co, which may further improve the corrosion resistance. In an exemplary embodiment, the ferritic matrix may further comprise Cr, Si and Ni, which may further improve the corrosion resistance at high temperature. In an exemplary embodiment, the ferritic matrix may further comprise Mn and/or Mo, which may bind trace elements, for instance S in case of Mn and/or P in case of Mo. In an exemplary embodiment, the ferritic matrix may further comprise B, which may increase the stability of grain boundaries.

The new ferritic alloys contain particles dispersed in the ferritic matrix leading to an oxide dispersion strengthened (ODS) material. The dispersed particles comprise oxide particles comprising Al-Fe based oxide precipitates and/or Al₂O₃ particles. The particles are present in a solid form within the ferritic alloy, in particular the particles are finely dispersed in the ferritic matrix, and in particular not in the form of a solid solution.

The particles are comprised in the ferritic alloy in an amount of from 1 to 40 vol% based on the total volume of the alloy. The particles mainly serve for improving the creep resistance of the ferritic alloy and the strength in general. If the amount of particles is less than 1 vol%, the creep resistance improving effect is too little pronounced so as to achieve a ferritic alloy having excellent creep resistance. If the amount of particles is more than 40 vol%, the creep resistance is not further improved significantly and there is the risk that the particles can no longer be finely dispersed in the ferritic matrix and that the ferritic alloy tends to become brittle and the workability of the alloy may be worsened. The lower limit of the amount of particles comprised in the ferritic alloy is in particular 1.5 vol%, in particular 2 vol%, in particular 2.5 vol%, in particular 3 vol%, in particular 4 vol%, in particular 5 vol%, in particular 6 vol%, in particular 7 vol%, in particular 8 vol%, in particular 10 vol%, in particular 12.5 vol%, and the upper limit of the amount of particles comprised in the ferritic alloy is in particular 35 vol%, in particular 30 vol%, in particular 25 vol%, in particular 20 vol%, in particular 18 vol%, in particular 15 vol%, all based on the total volume of the alloy.

The shape of the particles is not particular limited, but is preferably such that the size of the particles in any direction does not exceed significantly the size in all other directions, in particular the shape of the particles may be spherical, prismatic, polyhedral, and the like, but may also by needle-shaped or columnar.

The ferritic alloy according to the present invention may have a density of from 6.0 to 7.0 g/cm³, in particular of from 6.5 to 7.0 g/cm³, which is significantly lower than the density of conventional ODS alloys and is thus advantageous when weight reduction of the structural material formed by the ferritic alloy is desired, for example for static or energy-saving reasons.

The ferritic alloy according to the present invention may be in particular obtainable (or obtained) by a method of the present invention that will be described in further detail below.

In an exemplary embodiment of the first aspect of the present invention, the ferritic ODS alloy comprises oxide particles comprising Al-Fe based oxide precipitates. In particular, the Al-Fe based oxide precipitates may be complex oxides of Al and Fe. In particular, the Al-Fe based oxide precipitates may be Al-Fe-X based oxide precipitates, wherein X represents an additional alloying element, such as Y (up to 10 wt% of the Al-Fe-X based oxide precipitate) and/or Ti (up to 10 wt% of the Al-Fe-X based oxide precipitate) and/or Cr (up to 15 wt% of the Al-Fe-X based oxide precipitate) and/or Si (up to 15 wt% of the Al-Fe-X based oxide precipitate).

In particular, the Al-Fe based oxide precipitates may comprise or consist of FeAl₂O₄. FeAl₂O₄ typically has a spinel structure and exhibits an excellent creep and coarsening resistance improving effect in an Fe-AI based ferritic alloy. In addition, these precipitates can be easily formed from inexpensive and largely available raw materials, such as Fe, Al and optionally Fe₂O₃, by means of a mechanical alloying process, for instance in a process as described below.

The oxide particles comprising Al-Fe based oxide precipitates are preferably contained in the ferritic matrix in an amount of from 1 to 20 vol%, in particular in an amount of from 2 to 18 vol%, in particular in an amount of from 3 to 15 vol%, in particular in an amount of from 5 to 10 vol%, all based on the total volume of the alloy.

The oxide particles comprising Al-Fe based oxide precipitates are preferably nano-sized particles. Such particles can be very uniformly dispersed in the ferritic matrix so as to obtain a homogenous dispersion of particles in the ferritic matrix.

The term "nano-sized", as used herein, defines in particular particles having an average particle diameter of from 2 to 100 nm, in particular from 5 to 50 nm, in particular from 10 to 30 nm, in particular from 15 to 25 nm. The determination of an average particle diameter is known to a person skilled in the art and can be performed for instance by visual microscopic observation with an appropriate magnification, for instance by using an electron microscope (such as a transmission electron microscope (TEM) or a high resolution scanning electron microscope (SEM)) and by randomly selecting an appropriate number of particles and calculating the average of the individual particle diameters.

In a further exemplary embodiment of the first aspect of the present invention, the ferritic alloy comprises Al₂O₃ particles. Hereby, the Al₂O₃ particles and the ferritic matrix typically form a composite material.

A "composite material", as used herein, in particular denotes a material which is heterogeneous and is composed of two or more phases with significantly different mechanical, physical and chemical properties. Usually one of the phases is continuous and it represents the matrix. The discontinuous phase is also called reinforcement and is represented by the particles, in particular the Al₂O₃ particles.

The Al₂O₃ particles may be for instance α-Al₂O₃ or γ-Al₂O₃ particles, and preferably α-Al₂O₃ particles.

Al₂O₃ particles provide for an excellent improvement of creep resistance and thermal stability in an Fe-AI based ferritic alloy and represent an inexpensive and largely available raw material, that can be directly used (without pre-treatment) in a mechanical alloying process, for instance in a process as described below.

The Al₂O₃ particles are preferably contained in the ferritic matrix in an amount of from 5 to 40 vol%, in particular in an amount of from 7.5 to 35 vol%, in particular in an amount of from 10 to 30 vol%, in particular in an amount of from 12.5 to 25 vol%, all based on the total volume of the alloy.

The Al₂O₃ particles are submicro-sized or micro-sized particles. Such relatively large particles are generally more resistant to coarsening compared with small particles in ODS alloys, resulting in an improved creep resistance in comparison with conventional ODS alloys. Moreover, a pinning effect on dislocations is more pronounced for larger particles than for smaller ones.

The term "submicro-sized", as used herein, defines in particular particles having an average particle diameter of from 200 nm to 1.0 µm, and the term "micro-sized", as used herein, defines in particular particles having an average particle diameter of from 1.0 to 5.0 µm. Accordingly, the Al₂O₃ particles are particles having an average particle diameter of from 200 nm to 5 µm. The Al₂O₃ particles may be in particular particles having an average particle diameter of from 300 nm to 4 µm, in particular from 200 nm to 5 µm, in particular from 300 nm to 4 µm, in particular from 400 nm to 3 µm, in particular from 500 nm to 2 µm. With regard to the determination of an average particle diameter, reference is made to the above explanations in connection with "nano-sized" particles.

In a further exemplary embodiment of the first aspect of the present invention, the ferritic alloy comprises both oxide particles comprising Al-Fe based oxide precipitates and Al₂O₃ particles.

In a second aspect, the present invention relates to a method for preparing a ferritic alloy, in particular a ferritic alloy according to the present invention, comprising the steps of mechanical alloying of at least Fe powder, Al powder, or a pre-alloyed powder containing Fe and Al, and at least one of Fe₂O₃ powder and Al₂O₃ powder to obtain a mechanically alloyed powder and/or mechanical alloying of at least Fe powder and Al powder, or a pre-alloyed powder containing Fe and Al, in a reactive gas atmosphere, such as oxygen, to obtain a mechanically alloyed powder; sealing the mechanically alloyed powder in a vessel to obtain a sealed mechanically alloyed powder; hot consolidating the sealed mechanically alloyed powder.

The alloy that can be prepared by this method may in particular be the ferritic alloy according to the present invention.

For instance, when Fe₂O₃ powder is employed in the step of mechanical alloying, an Al-Fe based oxide, such as FeAl₂O₄, may be formed and precipitated in particular in the step of hot consolidation and/or in an optional heat treatment step. Without wishing to be bound to any theory, the present inventors assume that this is because Fe₂O₃ (having a molar Gibbs energy of formation, ΔG, of -376 kJ/mol) may act as a donor of oxygen for Al (with Al₂O₃ having a ΔG of -907 kJ/mol) and may therefore provide Al with oxygen to form a mixed Al-Fe based oxide, such as FeAl₂O₄. Thus, a ferritic ODS alloy comprising oxide particles comprising Al-Fe based oxide precipitates can be efficiently prepared at low cost. However, it is also possible to prepare a ferritic alloy comprising oxide particles comprising Al-Fe based oxide precipitates without employing Fe₂O₃ powder, in particular when a sufficient amount of oxygen from an oxygen containing gas atmosphere is introduced into the mechanically alloyed powder in the step of mechanical alloying.

When Al₂O₃ powder is employed in the step of mechanical alloying, which Al₂O₃ powder represents an inexpensive and largely available raw material, a ferritic alloy comprising Al₂O₃ particles can be efficiently prepared at low cost, in particular by mechanical alloying of individual phases. It should be noted that mechanical alloying may also be used even if the individual phases do not dissolve in each other.

When both Fe₂O₃ powder and Al₂O₃ powder are employed in the step of mechanical alloying, a ferritic alloy comprising both oxide particles comprising Al-Fe based oxide precipitates and Al₂O₃ particles can be efficiently prepared at low cost.

The particle sizes of the raw materials, such as Fe powder, Al powder and Fe₂O₃ powder, are not particularly limited because in the step of mechanical alloying they are milled (ground) anyway, as will be described in further detail below, so that a particular pre-treatment of the raw materials, while not excluded, is not required. In contrast, if Al₂O₃ powder is employed, Al₂O₃ powder with a particle size, as desired in the final alloy, i.e. having an average particle diameter of from 200 nm to 5.0 µm, is employed, because Al₂O₃ powder is hard and stable and its size remains substantially unchanged during the mechanical alloying.

In the step of mechanical alloying, it is possible to employ Fe powder and Al powder. However, it is also possible to employ a pre-alloyed powder containing Fe and Al.

In an exemplary embodiment, the method for preparing a ferritic alloy comprises the step of mechanical alloying of at least Fe powder, Al powder, or a pre-alloyed powder containing Fe and Al, and at least one of Fe₂O₃ powder and Al₂O₃ powder to obtain a mechanically alloyed powder. In particular, the method for preparing a ferritic alloy may comprise the step of mechanical alloying of at least Fe powder, Al powder and at least one of Fe₂O₃ powder and Al₂O₃ powder to obtain a mechanically alloyed powder. Furthermore, the method for preparing a ferritic alloy may comprise the step of mechanical alloying of at least a pre-alloyed powder containing Fe and Al and at least one of Fe₂O₃ powder and Al₂O₃ powder to obtain a mechanically alloyed powder.

In a further exemplary embodiment which may be combined with the above exemplary embodiment, the method for preparing a ferritic alloy comprises the step of mechanical alloying of at least Fe powder and Al powder, or a pre-alloyed powder containing Fe and Al, in a reactive gas atmosphere to obtain a mechanically alloyed powder. In particular, the method for preparing a ferritic alloy may comprise the step of mechanical alloying of at least Fe powder and Al powder and in a reactive gas atmosphere to obtain a mechanically alloyed powder. Furthermore, the method for preparing a ferritic alloy may comprise the step of mechanical alloying of at least a pre-alloyed powder containing Fe and Al in a reactive gas atmosphere to obtain a mechanically alloyed powder.

The reactive gas atmosphere may in particular be an oxygen containing gas atmosphere, such as an air atmosphere or an air atmosphere enriched with oxygen or a (pure) oxygen atmosphere. In particular, it may be advantageous to employ a well-defined amount of reactive gas(es). For example, an oxygen content may be adjusted by introducing well defined gas volumes to a ball mill that can be repeatedly evacuated, filled with reactive gas and tightly closed after filling it with the reactive gas atmosphere.

The step of mechanical alloying in particular involves an intimate mixing, intense milling (grinding) and re-welding of the raw materials. Preferably, the step of mechanical alloying is carried out by using a ball mill. By using a ball mill, it may be achieved that the raw materials are substantially comminuted to an atomic grade and they may be substantially completely homogenously distributed within the mechanically alloyed powder.

The ball mill suitable for use in the present invention is not particularly limited and various appropriate ball mills are commercially available. In particular, a planetary ball mill may be employed.

The balls of the ball mill preferably have a hardness (such as a Vickers hardness or a hardness on the Mohs scale) that is higher than the hardness of the strain hardened matrix phase so as to provide for an intense milling (grinding) of the raw materials. The balls of the ball mill can be in particular made of steel, such as stainless steel or martensitic steel, but other materials may be also suitable, as will be apparent for a person skilled in the art.

The rotation speed of the ball mill is not particularly limited, as long as an intimate mixing and intense milling (grinding) and re-welding of the raw materials can be achieved, and may be in particular from 50 to 500 rpm (revolutions per minute), in particular from 100 to 400 rpm, in particular from 200 to 300 rpm.

The duration of ball milling is not particularly limited, as long as an intimate mixing and intense milling (grinding) of the raw materials can be achieved, and may be in particular from 10 hour to 200 hours, in particular from 20 hours to 100 hours, in particular from 30 hours to 60 hours. In particular in the case of preparing a composite material, for instance when employing Al₂O₃ powder as a raw material and preparing a ferritic alloy comprising Al₂O₃ particles, it is advantageous to mechanically alloy (in particular in a ball mill) the powders for a time sufficient to obtain a homogenous composite structure in the mechanically alloyed powders.

The atmosphere in the ball mill is not particularly limited, in particular when at least one of Fe₂O₃ powder and Al₂O₃ powder is employed in the step of mechanical alloying, and it may be possible to carry out the ball milling under an air atmosphere or a nitrogen atmosphere or even a pure oxygen atmosphere. In such a case the atmosphere contains oxygen or another reactive gas as donor for forming precipitates in the mechanically alloyed powder. This is in contrast to the mechanical alloying (or the ball milling) of conventional ODS alloys which has to be carried out under an inert gas atmosphere, such as argon, so as to prevent oxidation of the mechanically alloyed powder. While an inert gas atmosphere, such as argon, is not excluded in the step of mechanical alloying according to the present invention, it is advantageous that the mechanical alloying (in particular the ball milling) is carried out under a non-inert gas atmosphere, such as an air atmosphere, a nitrogen atmosphere or an oxygen atmosphere, in particular an air atmosphere, for cost reasons and to simplify the processing. It might be in particular advantageous that the mechanical alloying (in particular the ball milling) is carried out under an oxygen containing gas atmosphere, such as an air atmosphere or an air atmosphere enriched with oxygen or an oxygen atmosphere, in particular in case of preparing a ferritic alloy comprising Al-Fe based oxide precipitates because thereby it can be achieved to introduce a sufficient amount of oxygen into the mechanically alloyed powder in the step of mechanical alloying so that the addition of Fe₂O₃ powder may not be required in the step of mechanical alloying. An example to adjust the oxygen content is to introduce well defined gas volumes to the ball mill that can be repeatedly evacuated, filled with reactive gas and tightly closed after filling it with the reactive gas atmosphere. Milling may take place in this case between the filling and evacuation steps.

The method for preparing a ferritic alloy comprises the step of sealing the mechanically alloyed powder in a vessel to obtain a sealed mechanically alloyed powder.

Prior to sealing the mechanically alloyed powder in a vessel, the mechanically alloyed powder may be tamped or shaken in the vessel so as to increase the initial density as much as possible.

The vessel suitable for sealing the mechanically alloyed powder is not particularly limited, as long as it can withstand the temperature and pressure conditions in the subsequent hot consolidation step. Suitable materials for the vessel include for instance low alloy steel or stainless steel, but other materials may be also suitable, as will be apparent for a person skilled in the art. The shape and size of the vessel suitable for sealing the mechanically alloyed powder is not particularly limited, and can be appropriately selected/adjusted depending on the amount of the mechanically alloyed powder to be sealed. It is advantageous that the vessel may be firmly (fixedly) sealed (closed), for instance by welding, so as to protect the powder from free oxidation during the subsequent hot consolidation step. The gas atmosphere in the vessel may be for instance air, argon, nitrogen, hydrogen or a mixture thereof. In some special cases exclusively inert gases or inert gas containing gas mixtures may be introduced to form materials with a defined micro-porosity which may improve the creep resistance. It may be also possible that the vessel is evacuated.

The method for preparing a ferritic alloy further comprises the step of hot consolidating the sealed mechanically alloyed powder.

The step of hot consolidating (or hot consolidation) may in particular involve a thermal or thermomechanical treatment so as to stabilize the microstructure of the ferritic alloy and its mechanical properties.

The step of hot consolidating (or hot consolidation) may in particular involve heating and/or pressing the sealed mechanically alloyed powder, in particular a hot pressing and/or hot rolling of the sealed mechanically alloyed powder. In particular, the step of hot consolidating may include hot working, sintering, forging, (hot) rolling, hot isostatic pressing (HIP), and the like. It is in particular advantageous if in the step of hot consolidating a plastic deformation occurs and shear strains are exerted on the sealed mechanically alloyed powder. Therefore, the step of hot consolidating preferably includes hot working, forging or (hot) rolling. In particular, the step of hot consolidating preferably includes hot rolling, which represents a very cost-efficient way of plastic deformation with high shear strains that favor the destroying of brittle grain boundary precipitates and enables the preparation of an alloy of any size with the alloy having substantially no pores. While not excluded, a hot isostatic pressing under inert gas atmosphere, as typically used for preparing conventional ODS steels, is not necessary for obtaining a highly creep-resistant alloy in view of the presence of Al in the mechanically alloyed powder. In addition, with hot isostatic pressing, only limited plastic deformation occurs and shear strains are only exerted in limited intensity on the sealed mechanically alloyed powder. Thus, for cost reasons and to simplify the processing, it is advantageous to carry out the step of hot consolidating in a non-inert gas atmosphere, such as an air atmosphere or a nitrogen atmosphere, in particular an air atmosphere, while it might also be advantageous to carry out the step of hot consolidating in argon gas atmosphere or an argon plus hydrogen gas atmosphere or other type of inert gas atmosphere.

The heating of the sealed mechanically alloyed powder is in particular carried out in a manner such that the sealed mechanically alloyed powder is heated to a temperature of from 900 to 1300 °C, in particular from 950 to 1250 °C, in particular from 1000 to 1200 °C. In particular in the case of preparing a composite material, for instance when employing Al₂O₃ powder as a raw material and preparing a ferritic alloy comprising Al₂O₃ particles, it is advantageous to heat the sealed mechanically alloyed powder to a temperature below 1150 °C, in particular below 1100 °C, in particular below 1050 °C, so as to minimize a reaction of Al₂O₃ with iron. The duration of heating is not particularly limited, as long as the entire sealed mechanically alloyed powder reaches the desired temperature, and may be in particular at least 10 minutes, in particular at least 15 minutes, in particular at least 20 minutes, and typically not more than 10 hours, in particular not more than 5 hours, in particular not more than 2 hours.

The consolidation by hot pressing of the sealed mechanically alloyed powder is in particular carried out under a pressure of from 200 to 1000 MPa, in particular from 250 to 750 MPa, in particular from 300 to 700 MPa, in particular from 350 to 650 MPa, in particular from 400 to 600 MPa. In particular, but not only, in the case of preparing a composite material, for instance when employing Al₂O₃ powder as a raw material and preparing a ferritic alloy comprising Al₂O₃ particles, it is advantageous to intensively deform the sealed mechanically alloyed powder together with the vessel under a significant hydrostatic stress so as to achieve a substantially complete consolidation of the powder. For example, an upsetting die may be used for (hot) pressing the sealed mechanically alloyed powder. The duration of (hot) pressing is not particularly limited, as long as a sufficient consolidation of the powder is achieved, and may be in particular at least 1 second, in particular at least 10 seconds, in particular at least 30 seconds, in particular at least 1 minute, and typically not more than 1 hour, in particular not more than 30 minutes, in particular not more than 20 minutes.

Further steps may be included in the method for preparing a ferritic alloy according to the present invention, for instance a heat treatment step or thermal treatment step (such as a tempering step, an annealing step), a shaping step (a moulding step), a (hot) forming step (a (hot) working step), a cleaning step (a rinsing step), and the like. Such steps are well known to a person skilled in the art and therefore do not require further explanations.

In particular, an additional thermal treatment step may be included which may help to ensure that the chemical reactions such as dissolution and precipitation, necessary to form the beneficial dispersion strengthened and stable microstructure, takes place sufficiently. This additional thermal treatment step may be performed for instance subsequently to the hot consolidating step.

In a further aspect, a method for preparing an alloy strengthened by precipitates is described, the method comprising the steps of mechanical alloying of at least a powder of a first metal element or a powder of the first element containing alloy and a powder of a compound of a second metal with at least one of oxygen, nitrogen and carbon, wherein the affinity of the first metal to the at least one of oxygen, nitrogen and carbon is higher than the affinity of the second metal to the at least one of oxygen, nitrogen and carbon, to obtain a mechanically alloyed powder and/or mechanical alloying of at least a powder of a first metal element and a powder of a second metal element, or a pre-alloyed powder containing a first metal element and a second metal element in a reactive gas atmosphere, to obtain a mechanically alloyed powder; sealing the mechanically alloyed powder in a vessel to obtain a sealed mechanically alloyed powder; hot consolidating the sealed mechanically alloyed powder. In the step of hot consolidating the sealed mechanically alloyed powder, a compound of the first metal with at least one of oxygen, nitrogen and carbon may be precipitated and/or a (mixed) compound of the first and second metal with the at least one of oxygen, nitrogen and carbon may be precipitated.

The reactive gas atmosphere may in particular be an oxygen or nitrogen containing gas atmosphere, such as an air atmosphere or an air atmosphere enriched with oxygen, an air atmosphere enriched with nitrogen, a (pure) oxygen atmosphere or a (pure) oxygen atmosphere. In particular, it may be advantageous to employ a well-defined amount of reactive gas(es).

In an exemplary embodiment, the method for preparing an alloy strengthened by precipitates may comprise the step of mechanical alloying of at least a powder of a first metal element and a powder of a compound of a second metal with oxygen (such as an oxide of the second metal) in a reactive gas atmosphere, wherein the affinity of the first metal to the oxygen is higher than the affinity of the second metal to the oxygen, to obtain a mechanically alloyed powder. In an exemplary embodiment, the method for preparing an alloy strengthened by precipitates may comprise the step of mechanical alloying of at least a powder of a first metal element and a powder of a compound of a second metal with at least two of oxygen, nitrogen and carbon, in particular with oxygen and nitrogen, with oxygen and carbon, or with oxygen, nitrogen and carbon, optionally in a reactive gas atmosphere, wherein the affinity of the first metal to any one of the at least two of oxygen, nitrogen and carbon is higher than the affinity of the second metal to any one of the at least two of oxygen, nitrogen and carbon, to obtain a mechanically alloyed powder.

The method of the further aspect is based on the finding that if an alloy comprises metallic elements with different affinities to oxygen, nitrogen or carbon, respectively, then the oxide, nitride or carbide, respectively, of the element with the lowest affinity to oxygen, nitrogen or carbon, respectively, is the most appropriate donor of oxygen, nitrogen or carbon, respectively, and subsequently complex oxides, nitrides or carbides, respectively, of elements with a higher affinity to oxygen, nitrogen or carbon, respectively, spontaneously precipitate during the hot consolidating step and/or an optional heat treatment step. Thereby oxygen can be dissolved in alloys in a sufficient amount and subsequently highly stable nanoclusters or fine precipitates of complex oxides precipitate during hot consolidation or an additional thermal treatment. Furthermore, a much higher volume fraction of nitrides or carbides can be achieved in the alloy compared with conventional ways of processing.

For instance, in case of oxygen/oxides, Fe may be used as the second metal (more specifically Fe₂O₃ may be used as the compound of the second metal with oxygen) and Al may be used as the first metal (element). Without wishing to be bound to any theory, the present inventors assume that Fe₂O₃ (having a molar Gibbs energy of formation, ΔG, of -376 kJ/mol) may act as a donor of oxygen for Al (with Al₂O₃ having a ΔG of -907 kJ/mol) and may therefore provide Al with oxygen to form Al₂O₃ (i.e. a compound of the first metal with oxygen) and/or a mixed Al-Fe based oxide (i.e. a (mixed) compound of the first and second metal with oxygen), such as FeAl₂O₄. Thus, based on the molar Gibbs energy values of formation of various oxides, nitrides or carbides, which are readily known to a person skilled in the art or are available from standard literature, a person skilled in the art can properly select appropriate first and second metal raw materials so as to prepare a large variety of alloys strengthened by precipitates, such as (stable) oxides, nitrides or carbides, according to the method of the further aspect.

For further details of the method steps including optional further steps, reference is made to the disclosure above in connection with the method for preparing a ferritic alloy according to the second aspect.

In particular, the step of hot consolidating may comprise a thermal or thermomechanical treatment so as to stabilize the microstructure of the ferritic alloy and its mechanical properties, and/or the method of the further aspect may comprise an additional thermal treatment step.

The present invention is further described by the following examples, which are solely for the purpose of illustrating specific embodiments, and are not construed as limiting the scope of the invention in any way.

### Examples

### Example 1

Individual metallic Al and Fe powders and Fe₂O₃ were weighed out in the proportions, so that the resultant ODS alloy has the matrix of chemical composition of Fe-10 wt.% Al with the dispersion of FeAl₂O₄ (90g Fe, 12g Al, 7g Fe₂O₃ was used). The powders were closed in a steel grinding bowl together with steel balls and milled (mechanically alloyed) in a ball mill for 40 hours at 250 rpm. After milling, the powder was tamped and sealed in a low alloy steel can (30 mm in diameter and 30 mm high) by welding to protect the powder from free oxidation during subsequent heating. The consolidation of canned powders by hot pressing was performed in a robotic station. After heating to the consolidation temperature of 1150 °C in a furnace during 20 minutes, the can was transferred into an upsetting die and compressed in a single intensive upsetting step under a stress up to 1000 MPa. The diameter of the resulting compact was 50 mm with the height of 10 mm. After cooling, the ODS alloy was separated from the can. Then it can be stabilized by thermal or thermo-mechanical treatment and subsequently shaped by machining or by hot forming.

Creep tests (in accordance with DIN EN ISO 204) were performed at temperatures of 950 °C for the case of uniaxial pressure at stress levels of 50 MPa which led to steady state creep rates in the order of below 10⁻⁸ s⁻¹. Compared to tests performed on newly developed ODS alloys in Oak Ridge National Laboratories, the measured creep rate is more than one order of magnitude lower.

### Example 2

Individual metallic Al and Fe powders were weighed out to provide a mixture of 10 wt.% of Al and 90 wt.% of Fe. Then further 15 wt.% of fine-grained Al₂O₃ powder was added. The mixture was closed in a grinding bowl together with steel balls and milled in a ball mill for 40 hours at 250 rpm. After milling the powder was tamped and sealed in a low alloy steel can (30 mm in diameter and 30 mm high) by welding to protect the powder from free oxidation during subsequent heating. The consolidation of canned powders by hot pressing was performed in a robotic station. After heating to the consolidation temperature of 1000 °C in a furnace during 20 minutes, the can was transferred into an upsetting die and compressed in a single intensive upsetting step under a stress up to 1000 MPa. The diameter of the resulting compact was 50 mm with the height of 10 mm. After cooling the composite was separated from the can and it can be stabilized by thermal or thermomechanical treatment. Both thermal treatment and thermo-mechanical treatment can be performed under air atmosphere because the composite is sufficiently oxidation-resistant. The thermo-mechanical treatment should provoke the grain coarsening by dynamic or static recrystallization and so increase the creep resistance as well as the particle stability against coarsening. It is proposed to heat the composite during a short time and deform it quickly up to 10% of strain and then to anneal it at a temperature between 800 °C and 1000°C. After having found the proper thermomechanical treatment conditions, the thermo-mechanical treatment can also be coupled with hot forming of the composite to the final or near to final form of the part.

Creep tests (in accordance with DIN EN ISO 204) were performed at temperatures 800 (900) °C for the case of uniaxial pressure at stress levels of 120 (80) MPa which led in both cases to steady state creep rates in the order of 10⁻⁷ s⁻¹. Compared to conventional steels this creep rate is by several orders of magnitude lower.

While the present invention has been described in detail by way of specific embodiments and examples, the invention is not limited thereto and various alterations and modifications are possible, without departing from the scope of the invention.

## Claims

1. A ferritic alloy, comprising
a ferritic matrix and
particles in an amount of from 1 to 40 vol% based on the total volume of the alloy,
wherein the ferritic matrix comprises
from 2 to 12 wt% Al,
optionally from 0.3 to 25 wt% Cr,
optionally from 0.3 to 15 wt% Ni,
optionally from 0.3 to 15 wt% Mn,
optionally from 0.05 to 3 wt% Mo,
optionally from 0.05 to 6 wt% W,
optionally from 0.01 to 3 wt% V,
optionally from 0.01 to 1 wt% B,
optionally from 0 to 1 wt% N,
optionally from 0 to 10 wt% Si,
optionally from 0 to 1 wt% P,
optionally from 0 to 1 wt% Ti,
optionally from 0 to 15 wt% Co,
optionally from 0 to 3 wt% Cu,
optionally from 0 to 1 wt% Y,
optionally from 0 to 3 wt% Zr,
optionally from 0 to 3 wt% Nb,
optionally from 0 to 1 wt% Hf,
optionally from 0 to 2 wt% Ta,
optionally from 0 to 2 wt% Re,
optionally from 0 to 3 wt% rare earth elements,
the balance being Fe and inevitable impurities,
wherein the particles comprise (i) and/or (ii), as defined in the following:
(i) oxide particles comprising Al-Fe based oxide precipitates, wherein the Al-Fe based oxide precipitates comprise at least one of FeAl₂O₄, complex oxides of Al and Fe, and Al-Fe-X based oxide precipitates, wherein X represents at least one additional alloying element selected from the group consisting of Y, Ti, Cr and Si;
(ii) Al₂O₃ particles having an average particle diameter of from 500 nm to 2 µm, as determined by visual microscopic observation by using an electron microscope.

2. The ferritic alloy according to claim 1, wherein the particles comprise oxide particles comprising Al-Fe based oxide precipitates.

3. The ferritic alloy according to claim 2, wherein the oxide particles are comprised in an amount of from 1 to 20 vol% based on the total volume of the alloy.

4. The ferritic alloy according to claim 2 or 3, wherein the Al-Fe based oxide precipitates comprise FeAl₂O₄.

5. The ferritic alloy according to any one of claims 2 to 4, wherein the oxide particles are nano-sized particles, in particular having an average particle diameter of from 2 to 100 nm, as determined by visual microscopic observation by using an electron microscope.

6. The ferritic Fe-AI alloy according to claim 1, wherein the particles comprise Al₂O₃ particles.

7. The ferritic alloy according to claim 6, wherein the Al₂O₃ particles are comprised in an amount of from 5 to 40 vol% based on the total volume of the alloy.

8. The ferritic alloy according to any one of the preceding claims, wherein the alloy has a density of from 6.0 to 7.0 g/cm³, in particular of from 6.5 to 7.0 g/cm³.

9. A method for preparing a ferritic alloy, in particular a ferritic alloy according to any one of claims 1 to 8, comprising the steps of
mechanical alloying of at least Fe powder, Al powder, or a pre-alloyed powder containing Fe and Al, and at least one of Fe₂O₃ powder and Al₂O₃ powder having an average particle diameter of from 200 nm to 2 µm, as determined by visual microscopic observation by using an electron microscope, to obtain a mechanically alloyed powder and/or
mechanical alloying of at least Fe powder and Al powder, or a pre-alloyed powder containing Fe and Al, in a reactive gas atmosphere to obtain a mechanically alloyed powder;
sealing the mechanically alloyed powder in a vessel to obtain a sealed mechanically alloyed powder;
hot consolidating the sealed mechanically alloyed powder.

10. The method according to claim 9,
wherein the step of mechanical alloying is carried out by using a ball mill and/or
wherein the step of hot consolidating comprises a thermal or thermomechanical treatment.

11. The method according to claim 9 or 10, wherein the step of hot consolidating comprises heating the sealed mechanically alloyed powder to a temperature of from 900 to 1300 °C.

12. The method according to any one of claims 9 to 11, wherein the step of hot consolidating comprises hot rolling and/or pressing the sealed mechanically alloyed powder, in particular hot pressing the sealed mechanically alloyed powder and in particular under a pressure of from 200 to 1000 MPa.

## Patentansprüche

1. Eine ferritische Legierung, umfassend:
eine ferritische Matrix und
Teilchen in einer Menge von 1 bis 40 Vol.-%, bezogen auf das Gesamtvolumen der Legierung,
wobei die ferritische Matrix Folgendes umfasst:
von 2 bis 12 Gew.-% AI,
optional von 0,3 bis 25 Gew.-% Cr,
optional von 0,3 bis 15 Gew.-% Ni,
optional von 0,3 bis 15 Gew.-% Mn,
optional von 0,05 bis 3 Gew.-% Mo,
optional von 0,05 bis 6 Gew.-% W,
optional von 0,01 bis 3 Gew.-% V,
optional von 0,01 bis 1 Gew.-% B,
optional von 0 bis 1 Gew.-% N,
optional von 0 bis 10 Gew.-% Si,
optional von 0 bis 1 Gew.-% P,
optional von 0 bis 1 Gew.-% Ti,
optional von 0 bis 15 Gew.-% Co,
optional von 0 bis 3 Gew.-% Cu,
optional von 0 bis 1 Gew.-% Y,
optional von 0 bis 3 Gew.-% Zr,
optional von 0 bis 3 Gew.-% Nb,
optional von 0 bis 1 Gew.-% Hf,
optional von 0 bis 2 Gew.-% Ta,
optional von 0 bis 2 Gew.-% Re,
optional von 0 bis 3 Gew.-% Seltenerdelemente,
der Rest sind Fe und unvermeidliche Verunreinigungen,
wobei die Teilchen (i) und/oder (ii), wie im Folgenden definiert, umfassen:
(i) Oxidteilchen, die Oxidpräzipitate auf Al-Fe-Basis umfassen, wobei die Oxidpräzipitate auf Al-Fe-Basis mindestens eines von FeAl₂O₄, komplexen Oxiden von AI und Fe und Oxidpräzipitate auf Al-Fe-X-Basis umfassen, wobei X mindestens ein zusätzliches Legierungselement darstellt, das aus der Gruppe, bestehend aus Y, Ti, Cr und Si, ausgewählt ist;
(ii) Al₂O₃-Teilchen mit einem durchschnittlichen Teilchendurchmesser von 500 nm bis 2 µm, wie durch visuelle mikroskopische Beobachtung unter Verwendung eines Elektronenmikroskops bestimmt.

2. Die ferritische Legierung nach Anspruch 1, wobei die Teilchen Oxidteilchen umfassen, die Oxidpräzipitate auf Al-Fe-Basis umfassen.

3. Die ferritische Legierung nach Anspruch 2, wobei die Oxidteilchen in einer Menge von 1 bis 20 Vol.-%, bezogen auf das Gesamtvolumen der Legierung, enthalten sind.

4. Die ferritische Legierung nach Anspruch 2 oder 3, wobei die Oxidpräzipitate auf Al-Fe-Basis FeAl₂O₄ umfassen.

5. Die ferritische Legierung nach einem der Ansprüche 2 bis 4, wobei die Oxidteilchen nanoskalige Teilchen sind, insbesondere mit einem durchschnittlichen Teilchendurchmesser von 2 bis 100 nm, wie durch visuelle mikroskopische Beobachtung unter Verwendung eines Elektronenmikroskops bestimmt.

6. Die ferritische Legierung nach Anspruch 1, wobei die Teilchen Al₂O₃-Teilchen umfassen.

7. Die ferritische Legierung nach Anspruch 6, wobei die Al₂O₃-Teilchen in einer Menge von 5 bis 40 Vol.-%, bezogen auf das Gesamtvolumen der Legierung, enthalten sind.

8. Die ferritische Legierung nach einem der vorangehenden Ansprüche, wobei die Legierung eine Dichte von 6,0 bis 7,0 g/cm³, insbesondere von 6,5 bis 7,0 g/cm³, aufweist.

9. Ein Verfahren zur Herstellung einer ferritischen Legierung, insbesondere einer ferritischen Legierung nach einem der Ansprüche 1 bis 8, wobei das Verfahren die folgenden Schritte umfasst:
mechanisches Legieren von zumindest Fe-Pulver, AI-Pulver oder einem vorlegierten Pulver, das Fe und AI enthält, und mindestens eines von Fe₂O₃-Pulver und Al₂O₃-Pulver mit einem durchschnittlichen Teilchendurchmesser von 200 nm bis 2 µm, wie durch visuelle mikroskopische Beobachtung unter Verwendung eines Elektronenmikroskops bestimmt, um ein mechanisch legiertes Pulver zu erhalten und/oder
mechanisches Legieren von zumindest Fe- und AI-Pulver oder einem vorlegierten Pulver, das Fe und AI enthält, in einer reaktiven Gasatmosphäre, um ein mechanisch legiertes Pulver zu erhalten;
Versiegeln des mechanisch legierten Pulvers in einem Behälter, um ein versiegeltes, mechanisch legiertes Pulver zu erhalten;
Warmverfestigen des versiegelten, mechanisch legierten Pulvers.

10. Das Verfahren nach Anspruch 9,
wobei der Schritt des mechanischen Legierens unter Verwendung einer Kugelmühle durchgeführt wird und/oder
wobei der Schritt des Warmverfestigens eine thermische oder thermomechanische Behandlung umfasst.

11. Das Verfahren nach Anspruch 9 oder 10, wobei der Schritt des Warmverfestigens ein Erhitzen des versiegelten, mechanisch legierten Pulvers auf eine Temperatur von 900 bis 1300 °C umfasst.

12. Das Verfahren nach einem der Ansprüche 9 bis 11, wobei der Schritt des Warmverfestigens ein Warmwalzen und/oder Pressen des versiegelten, mechanisch legierten Pulvers umfasst, insbesondere ein Heißpressen des versiegelten, mechanisch legierten Pulvers und insbesondere unter einem Druck von 200 bis 1000 MPa.

## Revendications

1. Alliage ferritique, comprenant
une matrice ferritique et
des particules en une quantité de 1 à 40 % en vol sur la base du volume total de l'alliage,
dans lequel la matrice ferritique comprend
de 2 à 12 % en poids d'AI,
optionnellement de 0,3 à 25 % en poids de Cr,
optionnellement de 0,3 à 15 % en poids de Ni,
optionnellement de 0,3 à 15 % en poids de Mn,
optionnellement de 0,05 à 3 % en poids de Mo,
optionnellement de 0,05 à 6 % en poids de W,
optionnellement de 0,01 à 3 % en poids de V,
optionnellement de 0,01 à 1 % en poids de B,
optionnellement de 0 à 1 % en poids de N,
optionnellement de 0 à 10 % en poids de Si,
optionnellement de 0 à 1 % en poids de P,
optionnellement de 0 à 1 % en poids de Ti,
optionnellement de 0 à 15 % en poids de Co,
optionnellement de 0 à 3 % en poids de Cu,
optionnellement de 0 à 1 % en poids de Y,
optionnellement de 0 à 3 % en poids de Zr,
optionnellement de 0 à 3 % en poids de Nb,
optionnellement de 0 à 1 % en poids d'Hf,
optionnellement de 0 à 2 % en poids de Ta,
optionnellement de 0 à 2 % en poids de Re,
optionnellement de 0 à 3 % en poids de terres rares,
le reste étant du Fe et des impuretés inévitables,
dans lequel les particules comprennent (i) et/ou (ii), telles que définies ci-dessous :
(i) des particules d'oxyde comprenant des précipités d'oxyde à base d'Al-Fe, dans lequel les précipités d'oxyde à base d'Al-Fe comprennent au moins un élément parmi le FeAl₂O₄, des oxydes complexes d'AI et de Fe, et des précipités d'oxyde à base d'Al-Fe-X, dans lequel X représente au moins un élément d'alliage additionnel choisi dans le groupe constitué de Y, Ti, Cr et Si ;
(ii) des particules d'Al₂O₃ ayant un diamètre de particule moyen de 500 nm à 2 µm, tel que déterminé par observation microscopique visuelle en utilisant un microscope électronique.

2. Alliage ferritique selon la revendication 1, dans lequel les particules comprennent des particules d'oxyde comprenant des précipités d'oxyde à base d'Al-Fe.

3. Alliage ferritique selon la revendication 2, dans lequel les particules d'oxyde sont comprises en une quantité de 1 à 20 % en vol sur la base du volume total de l'alliage.

4. Alliage ferritique selon la revendication 2 ou 3, dans lequel les précipités d'oxyde à base d'Al-Fe comprennent du FeAl₂O₄.

5. Alliage ferritique selon l'une quelconque des revendications 2 à 4, dans lequel les particules d'oxyde sont des particules de taille nanométrique, en particulier ayant un diamètre de particule moyen de 2 à 100 nm, tel que déterminé par observation microscopique visuelle en utilisant un microscope électronique.

6. Alliage de Fe-AI ferritique selon la revendication 1, dans lequel les particules comprennent des particules d'Al₂O₃.

7. Alliage ferritique selon la revendication 6, dans lequel les particules d'Al₂O₃ sont comprises en une quantité de 5 à 40 % en vol sur la base du volume total de l'alliage.

8. Alliage ferritique selon l'une quelconque des revendications précédentes, dans lequel l'alliage a une masse volumique de 6,0 à 7,0 g/cm³, en particulier de 6,5 à 7,0 g/cm³.

9. Procédé de préparation d'un alliage ferritique, en particulier d'un alliage ferritique selon l'une quelconque des revendications 1 à 8, comprenant les étapes de
alliage mécanique d'au moins une poudre de Fe, une poudre d'AI, ou une poudre pré-alliée contenant du Fe et de l'Al, et d'au moins un élément parmi une poudre de Fe₂O₃ et une poudre d'Al₂O₃ ayant un diamètre de particule moyen de 200 nm à 2 µm, tel que déterminé par observation microscopique visuelle en utilisant un microscope électronique, pour obtenir une poudre alliée mécaniquement et/ou
alliage mécanique d'au moins une poudre de Fe et une poudre d'AI, ou d'une poudre pré-alliée contenant du Fe et de l'Al, dans une atmosphère de gaz réactif pour obtenir une poudre alliée mécaniquement ;
scellement de la poudre alliée mécaniquement dans un récipient pour obtenir une poudre alliée mécaniquement scellée ;
consolidation à chaud de la poudre alliée mécaniquement scellée.

10. Procédé selon la revendication 9,
dans lequel l'étape d'alliage mécanique est réalisée en utilisant un broyeur à boulets et/ou dans lequel l'étape de consolidation à chaud comprend un traitement thermique ou thermomécanique.

11. Procédé selon la revendication 9 ou 10, dans lequel l'étape de consolidation à chaud comprend le chauffage de la poudre alliée mécaniquement scellée à une température de 900 à 1300 °C.

12. Procédé selon l'une quelconque des revendications 9 à 11, dans lequel l'étape de consolidation à chaud comprend le laminage et/ou le pressage à chaud de la poudre alliée mécaniquement scellée, en particulier le pressage à chaud de la poudre alliée mécaniquement scellée et en particulier sous une pression de 200 à 1000 MPa.
